## Europäisches Patentamt
## European Patent Office
## Office européen des brevets

(19)

(11) Veröffentlichungsnummer: **0 037 068**
**A2**

(12) **EUROPÄISCHE PATENTANMELDUNG**

(21) Anmeldenummer: **81102240.9**

(22) Anmeldetag: **25.03.81**

(51) Int. Cl.³: **H 04 B 7/26**

(30) Priorität: **28.03.80 DE 3012141**

(43) Veröffentlichungstag der Anmeldung:
**07.10.81 Patentblatt 81/40**

(84) Benannte Vertragsstaaten:
**AT BE CH FR GB IT LI LU NL SE**

(71) Anmelder: **SIEMENS AKTIENGESELLSCHAFT Berlin
und München
Postfach 22 02 61
D-8000 München 22(DE)**

(72) Erfinder: **Kammerlander, Karl
Wiesenstrasse 10
D-8190 Wolfratshausen(DE)**

(54) **Mobiles Funksystem.**

(57) Die Erfindung betrifft ein landesweites mobiles Funksystem, das nach Art eines Cellularsystems gestaltet ist und im Bereich der Landesgrenzen Überschneidungszonen mit autonomen Funknetzen der Nachbarländer aufweist, die im gleichen Frequenzgebiet jedoch mit unterschiedlichem Kanalrasterabstand arbeiten. Um hier zur Vermeidung von Störungen eine flexible Anpassung der Kanalabstände zu erreichen, wird vorgeschlagen, die den mobilen Teilnehmern (TLN) von den Funkkonzentratoren der Funkbereiche (1, 2...7) insgesamt zuweisbaren Frequenzkanäle wenigstens in zwei Gruppen, nämlich einer ersten Gruppe mit einem ersten Kanalraster (R10) und einer zweiten Gruppe mit einem zweiten Kanalraster (R12,5) zu darstellen. Hierbei hat die Zuweisung von Frequenzkanälen der einen Gruppe seitens der Funkkonzentratoren an die Teilnehmerstationen Vorrang. Die Zuweisung von Frequenzkanälen der anderen Gruppe erfolgt im Grenzgebiet zu einem anderen autonomen Funknetz nur dann, wenn in der Überschneidungzone dieser beiden Funknetze ansonsten Kanalstörungen zu befürchten sind.

EP 0 037 068 A2

Croydon Printing Company Ltd

FIG 1

0037068

SIEMENS AKTIENGESELLSCHAFT
Berlin und München

Unser Zeichen
VPA
80 P 6 5 6 3 E

**Mobiles Funksystem**

Die Erfindung bezieht sich auf ein mobiles Funksystem mit netzweiter Synchronisation, bestehend aus einer Anzahl Funkkonzentratoren in gegenseitiger räumlicher Anordnung nach Art eines Cellularsystems mit sich überlappenden Funkbereichen, bei dem jeweils eine fest vorgegebene Anzahl voneinander unmittelbar benachbarten Funkbereichen eine Funkbereichsgruppe bilden, in denen sich die insgesamt zur Verfügung stehenden Frequenzkanäle, vorzugsweise Frequenzduplexkanäle, wiederholen, bei dem ferner der Frequenzverteilungsplan für die Funkkonzentratoren so festgelegt ist, daß Gleichkanalstörungen im jeweiligen Funkbereich einschließlich einer erweiterten Randzone ausgeschlossen sind und bei dem wenigstens die Signalisierung in digitaler Form zwischen den ortsfesten Funkkonzentratoren und den beweglichen Teilnehmerstationen über Organisationskanäle, vorzugsweise Duplexorganisationskanäle, vorgenommen ist.

Die in einem solchen Funksystem, wie es beispielsweise durch die DE-AS 26 59 635 beschrieben ist, verwendeten Frequenzkanäle stellen ein Frequenzraster mit unter sich gleichen Abständen dar, die entsprechend dem Frequenzverteilungsplan im gesamten Netz von den Funkkonzentratoren den mobilen Teilnehmern fortlaufend für einen Verbindungsaufbau zwischen mobilen Teilnehmern und ortsfesten Teilnehmern oder aber mobilen Teilnehmern mit anderen mobilen Teilnehmern vorgeschlagen werden. Da solche Funksysteme im allgemeinen landesweit ausgeführt sind, d.h. gebietsmäßig durch die Landesgrenzen festgelegt sind, entstehen zwangsläufig im Grenzbereich

Jae 1 Bsl / 26.03.1980

Überschneidungszonen zu entsprechenden mobilen Funksystemen der Nachbarländer, in denen sich die in der Regel verschieden gestalteten Funknetze im Hinblick auf einen einwandfreien Funkverkehr störend beeinflußen können. Dies ist besonders dann der Fall, wenn beide Funknetze von einem unterschiedlichen Frequenzraster Gebrauch machen. Beispielsweise wird in der Bundesrepublik von einem Frequenzraster mit einem gegenseitigen Kanalabstand von 20 kHz gearbeitet, während die Funknetze der Nachbarländer im allgemeinen Frequenzraster mit einem Kanalabstand von 25 kHz vorsehen. Um in solchen Überschneidungszonen Störungen weitestgehend zu vermeiden, ist es erforderlich, die Kanalabstände der in diesen Überschneidungszonen vorgesehenen Frequenzkanäle der jeweiligen Situation entsprechend optimal anzupassen.

Der Erfindung liegt die Aufgabe zugrunde, für eine solche flexible Anpassung von Frequenzkanalabständen in den erwähnten Überschneidungszonen eine Lösung anzugeben, die bei einem möglichst geringen Aufwand auf seiten der mobilen Teilnehmergeräte eine Automatisierung dieser Anpassung ermöglicht.

Ausgehend von einem Funksystem der einleitend erwähnten Art, wird diese Aufgabe gemäß der Erfindung dadurch gelöst, daß die den mobilen Teilnehmern von den Funkkonzentratoren der Funkbereiche insgesamt zuweisbaren Frequenzkanäle wenigstens zwei Gruppen, nämlich eine erste Gruppe mit einem ersten Kanalraster und eine zweite Gruppe mit einem zweiten Kanalraster darstellen, daß ferner die Zuweisung von Frequenzkanälen der einen Gruppe Vorrang hat und die Zuweisung von Frequenzkanälen der anderen Gruppe nur im Grenzgebiet zu einem weiteren autonomen Funksystem hin dann erfolgt, wenn in der Überschneidungszone beider Funknetze ansonsten Kanalstörungen zu befürchten sind.

Der Erfindung liegt die Erkenntnis zugrunde, daß gegenseitige Funkstörungen im Überschneidungsbereich zweier autonomer Funksysteme dann in außerordentlich einfacher Weise weitestgehend unterbunden werden können, wenn, soweit erforderlich, die Einhaltung notwendiger gegenseitiger Mindestabstände der in einer solchen Überschneidungszone betriebenen Frequenzkanäle durch Anpassung des Frequenzrasters an das Frequenzraster des anderen Funksystems herbeigeführt wird.

Bei einer bevorzugten Ausführungsform sind die Frequenzkanäle in ihrer Gesamtheit fortlaufend numeriert. Dabei haben die Frequenzkanäle der einen Gruppe, beispielsweise der ersten Gruppe, ungerade Kanalzahlen und die Frequenzkanäle der anderen Gruppe, beispielsweise der zweiten Gruppe, gerade Kanalzahlen. Auf dieser Weise kann die automatische Anpassung der Kanalabstände der in einer solchen Überschneidungszone betriebenen mobilen Teilnehmerstationen dadurch in einfacher Weise herbeigeführt werden, daß die Synthesizersteuerung der mobilen Teilnehmerstationen in Abhängigkeit des Empfangs eines Kanalbefehls mit einer geraden oder ungeraden Kanalzahl den Synthesizer auf das Kanalraster der ersten oder zweiten Gruppe von Frequenzkanälen einstellt.

Diese Art der automatischen flexiblen Anpassung der Kanalabstände ist auch für den Fall ohne weiteres geeignet, daß die Anzahl der Frequenzkanäle beider Gruppen bei Bedarf durch Anwendung eines Zwischenrasters um den Faktor zwei bei gleichzeitiger Halbierung der Kanalabstände erhöht wird.

0037068

80 P 6 5 6 3 E

Bei einem mobilen Funksystem, bei dem den Funkkonzentratoren der Funkbereiche wenigstens ein Duplexorganisationskanal gemeinsam zugeordnet ist, der als Mehrfachzugriffkanal mit den Funkkonzentratoren zugeordneten Zeitschlitzen gestaltet ist, ist es sinnvoll, daß bei vorgegebener, der Gruppe mit Vorrang angehörenden FUKO-Sendefrequenz dieses Duplexorganisationskanals, dessen FUKO-Empfangsfrequenz im Bedarfsfalle den mobilen Teilnehmern aus der anderen Gruppe zuweisbar ist und daß hierbei unter Berücksichtigung der der Kanalpaarbildung dienenden Unterteilung jeder der beiden Gruppen von Frequenzkanälen in eine Ober- und Unterbandgruppe die Übertragung der Kanalnummern der Frequenzkanäle im Organisationskanal für ihre teilnehmerseitige Zuweisung auch nach Ober- und Unterband unterscheidbar vorgenommen ist. Auf diese Weise läßt sich gewährleisten, daß für alle mobilen Teilnehmer im Funknetz, also auch im Bereich der erwähnten Überschneidungszonen, im Bedarfsfalle bei zu ändernder FUKO-Empfangsfrequenz die FUKO-Sendefrequenz erhalten bleiben kann.

Eine weitere vorteilhafte Ausgestaltung der Erfindung ist im Patentanspruch 4 angegeben.

Anhand eines in der Zeichnung dargestellten Ausführungsbeispieles soll die Erfindung im folgenden noch näher erläutert werden. In der Zeichnung bedeuten.

Fig. 1 die schematische Darstellung eines landesweiten Funknetzes mit Überschneidungszonen

Fig. 2 die schematische Darstellung zweier Gruppen von Frequenzrastern

Fig. 3 die schematische Darstellung eines Funkkonzentrators und eines mobilen Teilnehmers

Fig. 4 die schematische Darstellung des Aufbaus eines Signalisierungsblockes in einem Organisationskanal

Fig. 5 eine nähere Darstellung der Nutzinformation in
einem Signalisierungsblock nach Fig. 4

Fig. 6 die weitere Darstellung eines Funknetzes

Fig. 7 die schematische Darstellung eines MehrfachzugriffOrganisationskanals

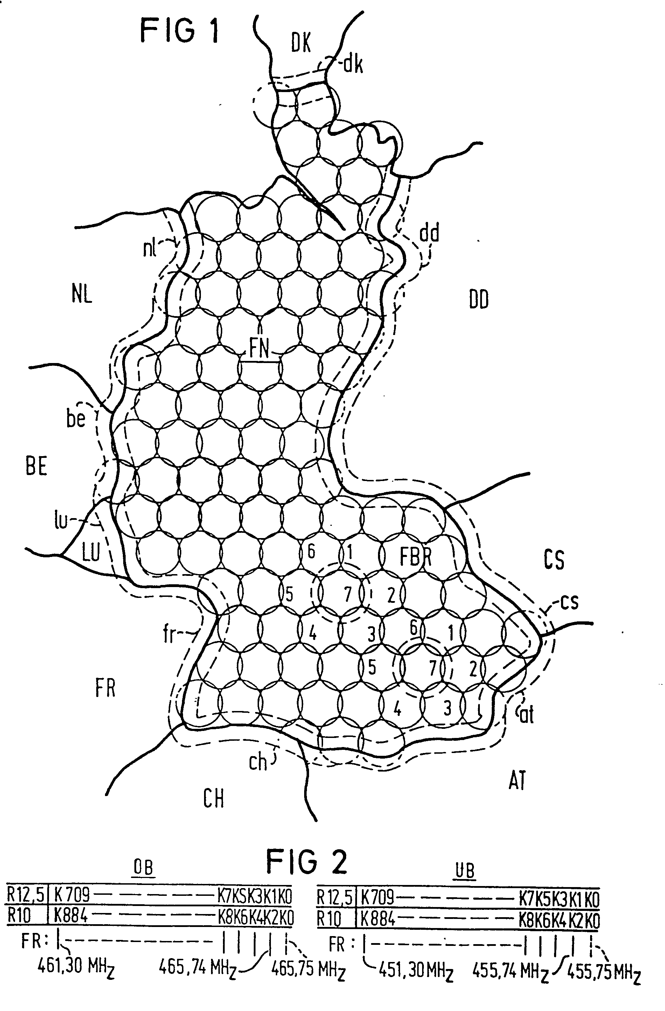

Fig. 1 zeigt ein nach einem Cellularsystem gestaltetes
Funknetz FN das landesweit den Grenzen der Bundesrepublik angepaßt ist. Die Funkbereiche 1, 2,..7 sind zu
Funkbereichsgruppen FBG zusammengefaßt, die in Fig. 1
durch unterbrochen gezeichneten Kreise angedeutet sind.
Innerhalb einer Funkbereichsgruppe FBG können sämtliche
innerhalb des Netzes verfügbaren Frequenzkanäle maximal
einmal zugeteilt werden. Das Funknetz FN arbeitet mit
netzweiter Synchronisation. Die Kanäle sind für Duplexbetrieb ausgelegt, d.h. das jedem Kanal ein Frequenzkanalpaar zugeordnet ist. Dabei ist der gegenseitige
Frequenzabstand zwischen den beiden Frequenzen eines
Frequenzkanalpaares für alle Kanäle bis auf eine noch
zu besprechender Ausnahme konstant.

Wie Fig. 1 weiter erkennen läßt, weist das Funknetz FN
in den Bereichen der gemeinsamen Grenze mit der Deutschen
Demokratischen Republik DD, der Tchechoslowakei CS,
Österreichs AT, der Schweiz CH, Frankreichs FR, Luxemburgs LU, Belgiens BE, der Niederlande NL und Dänemarks DK,
hinsichtlich ihrer zum Funknetz FN autonomen Funknetze
jeweils eine Überschneidungszone dd, cs, at, ch, fr, lu,
be, nl und dk auf. Um in diesen Überschneidungszonen
sich gegenseitig störende Frequenzkanäle zu vermeiden,
arbeiten die Funkkonzentratoren der Funkbereiche 1, 2,..7
des Funknetzes FN mit zwei Frequenzrastern, die in Fig. 2
schematisch dargestellt sind. Jede Kanalrastergruppe ist
zur Bildung von Frequenzpaaren für die Duplexkanäle in
ein Oberband OB und ein Unterband UB unterteilt. Das

- 6 - VPA

Frequenzraster FR für das Oberband geht von 461,30 MHz bis 465,74 MHz. Das Frequenzraster FR für das Unterband, das zum Frequenzraster für das Oberband einen Abstand von 10 MHz aufweist, hat die Grenzfrequenzen 451,30 MHz und 455,74 MHz. Über diesem Frequenzraster FR sind für das Oberband und das Unterband zwei Kanalraster R10 und R12,5 angegeben. Dabei bedeuten R10 ein Kanalraster mit einem gegenseitigen Abstand von 10 KHz und R12,5 ein Kanalraster mit einem gegenseitigen Abstand von 12,5 KHz. Beide Kanalraster sind auf den fiktiven Kanal mit der Kanalnummer K0 bezogen, der für das Oberband OB die Frequenz 465,75 MHz und für das Unterband UB die Frequenz 455,75 MHz aufweist.

Die Kanäle sind ausgehend vom fiktiven Kanal mit der Kanalnummer K0 jeweils fortlaufend nummeriert und zwar in gleicher Weise für das Oberband und das Unterband, wobei jedoch das Kanalraster R10 nur geradzahlige Kanalzahlen K2, K4, K6..K884 und das Kanalraster R12,5 nur ungeradzahlige Kanalzahlen K1,K3,K5 ...K709 aufweist. Gleiche Kanalnummern im Oberband OB und im Unterband UB ergeben ein Frequenzkanalpaar für einen Duplexsprechkanal. Je nach den funktechnischen Gegebenheiten in den in Fig. 1 dargestellten Überschneidungszonen, werden in den grenznahen Funkbereichen den mobilen Teilnehmern bei Bedarf Sprechkanäle vorgegeben, die anstatt dem normalerweise benutzten Kanalraster R10 dem Kanalraster R12,5, entnommen sind. Die aus dem Kanalraster R12,5 verwendeten Kanäle sind so ausgewählt, daß der systembedingte minimale Nachbarkanalabstand auf die im Funkbereich verwendeten R10 Kanäle nicht verletzt wird. Auf diese Weise lassen sich in den Überschneidungszonen auch dann die erforderlichen Frequenzabstände einhalten, wenn die autonomen Funknetze der Nachbarländer anstelle eines 10 KHz-Kanalabstandes einen 12,5 KHz-Kanalabstand haben. Entsprechendes gibt, für Kanalabstände von 20 und 25 KHz, aus denen die Kanalabstände 10 und 12,5 KHz durch zusätzliche Verwendung eines Zwischenrasters hervorgehen.

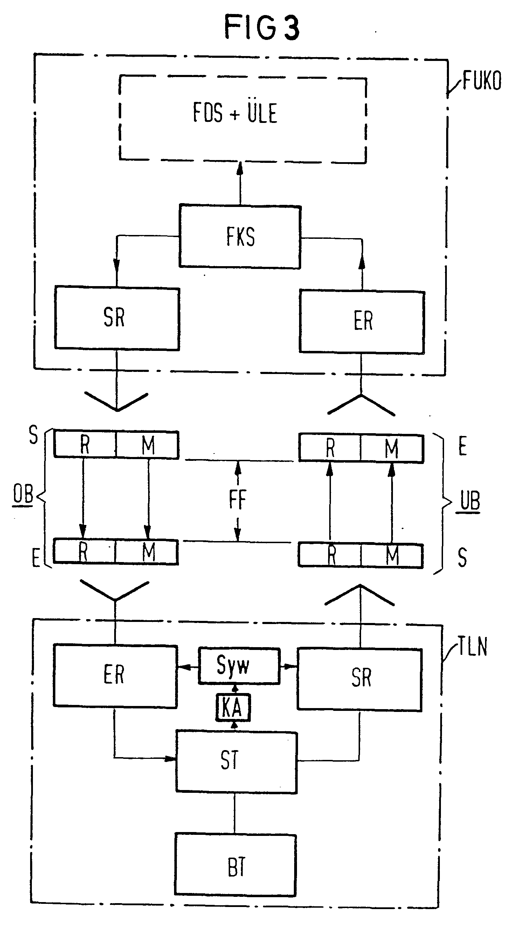

Das in Fig. 3 dargestellte Blockschaltbild eines Funkkonzentrators FUKO und einer Teilnehmerstation TLN veranschaulicht den Funkverkehr in einem Organisationskanal innerhalb des Funknetzes FN nach Fig. 1. Der Funkkonzentrator FUKO weist eine Funkdatensteuerung und eine Überleiteinrichtung FDS+ÜLE auf, die mit der Funkkanalsteuerung FKS zusammenarbeitet. Die Funkkanalsteuerung liefert dem Sender SR die zu übertragenden Signalisierungsblöcke im Oberband OB. Jeder Signalisierungsblock besteht aus zwei Teilblöcken, einem Rufblock R und einem Meldeblock M, die von der Sendeseite S des Funkkonzentrators zur Empfangsseite E auf der Teilnehmerseite über das Funkfeld FF übertragen werden.

Der Empfänger ER der mobilen Teilnehmerstation TLN leitet die empfangenen Signalisierungsblöcke dem Systemsteuerteil ST zu, dem der Sender SR nachgeschaltet ist. Zugleich ist das Systemsteuerteil ST mit dem Bedienteil BT verbunden. Die Umsetzfrequenzen für den Empfänger ER und den Sender SR der Teilnehmerstation TLN liefert der Synthesizer Syn, der vom Systemsteuerteil ST über den Kanalnummernauswerter KA angesteuert wird. Im Kanalnummernauswerter KA werden in Abhängigkeit davon, ob die Kanalnummer eine geradzahlige oder ungeradzahlige Kanalzahl ist, aus einem Frequenzadressenspeicher die einzustellende Frequenz im Kanalraster R10 bzw. R12,5 für die Steuerung des Synthesizers abgerufen. Der Sender SR der Teilnehmerstation TLN sendet seinerseits seine Blöcke im gleichen Format wie der Funkkonzentrator FUKO über das Funkfeld FF zum Empfänger ER im Organisationskanal.

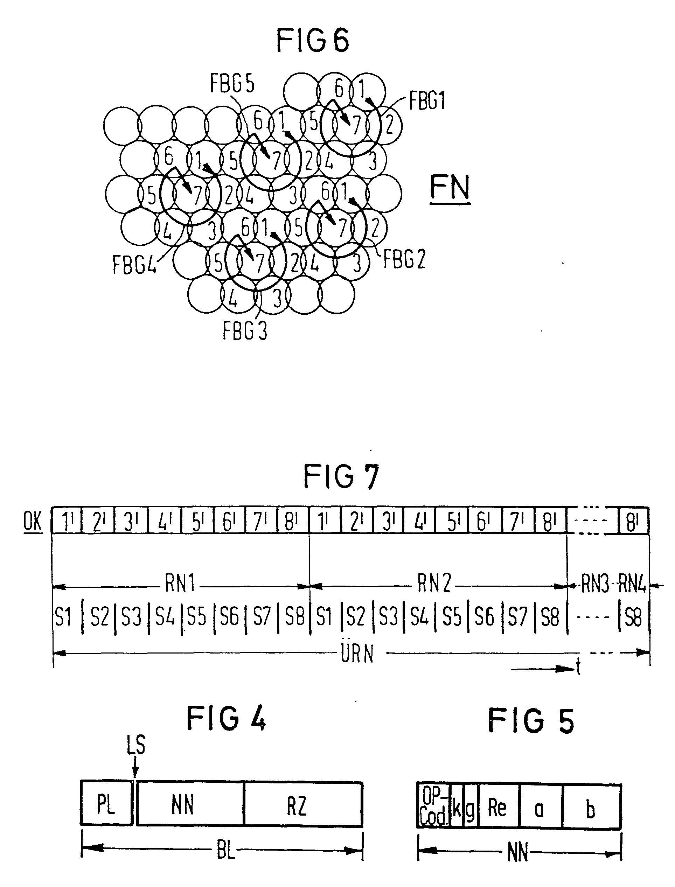

Fig. 4 zeigt in schematischer Darstellung einen Signalisierungsblock, beispielsweise einen Rufblock R oder einen Meldeblock M mit der Blocklänge BL. Die digitale Information eines solchen Informationsblocks sieht am Anfang eine Präambel PL vor, an die sich die Nutzinformation NN über ein Leerbit Ls anschließt. Der Nutzinformation folgt noch ein Abschnitt mit redundanter Infor-mation RZ mit deren Hilfe es möglich ist, auftretende Störungen bei der Übertragung wenigstens in begrenztem Umfang zu eliminieren.

Fig. 5 zeigt noch eine mögliche Unterteilung des Nutzinformationsabschnitts NN nach Fig. 4. Die Nutzinformation NN weist am Anfang einen Operationscode OP auf, an den sich eine Information k für die Sendeleistung, eine Zeitlageinformation b, ein Reserveabschnitt re für die Übertragung nicht ständig benötigter Information, ein Abschnitt a, für die Übertragung der eigentlichen Nutzinformation sowie der Funkbereichsnummer und der Bereichsabschnitt b für Nutzinformation einschließlich der Funkteilnehmernummer anschließen.

Für die Abwicklung der Organisationsfunktionen im Funknetz FN nach Fig. 1 kann anstelle von den Funkkonzentratoren zugehörigen Organisationskanälen auch wenigstens ein sämtlichen Funkbereichen zugeordneter Duplexorganisationskanal vorgesehen sein, der hierbei als Mehrfachzugriffkanal mit den Funkkonzentratoren 1, 2,..7 zugeordneten Zeitschlitzen gestaltet ist. Ein solcher Organisationskanal bringt insbesondere hinsichtlich des technischen Aufwands an Steuermitteln bei den mobilen Teilnehmerstationen erhebliche Vorteile mit sich, weil in diesem Falle die Teilnehmerstationen im Organisationskanal sowohl den Funkbereich, dem sie zugeordnet sind, abhören können, als auch sämtliche in den Zeitschlitzen dieses Organisationskanals übertragenen Signale der übrigen erreichbaren Funkkonzentratoren.

Zum besseren Verständnis dieses Sachverhalts dienen die Fig. 6 und 7. Die Fig. 6 zeigt einen Ausschnitt des Funknetzes FN mit fünf, jeweils aus sieben Funkbereichen 1, 2,..7 bestehenden Funkbereichsgruppen FBG1..FBG5. Jede Funkbereichsgruppe ist durch einen Ringpfeil hervorgehoben, der die im noch zu beschreibenden Organisationskanal nach Fig..7 angegebene zeitliche Reihenfolge der Informationsübertragung dieser Funkbereiche andeutet.

Dem Mehrfachzugriff-Organisationskanal nach Fig. 7 liegt die Erkenntnis zugrunde, daß die die gleiche Ziffer aufweisenden Funkbereiche 1, 2,..7 der Funkbereichsgruppen FBG1.. FBG5 funktechnisch so gut gegeneinander entkoppelt sind, daß sie den allen Funkbe- reichen gemeinsamen Organisationskanal jeweils gleich- zeitig benutzen können.

Der Organisationskanal OK nach Fig. 7 weist einen Überrahmen ÜRN auf, der vier Rahmen RN1, RN2, RN3 und RN4 mit jeweils acht Zeitschlitzen S1, S2,..S8 für die Übertragung von Informationsblöcken 1', 2',..8' der Funkbereiche 1, 2,..7 der Funkbereichsgruppen FBG1.. FBG5 aufweist. Die Informationsblöcke 1', 2',..7' sind hierbei entsprechend der Numerierung den Funkbereichen 1, 2,..7 zugeordnet, während der Zeitschlitz S8 einen Informationsblock 8' hat, der entweder einem der Funkbereiche 1, 2,..7 noch zusätzlich zur Verfügung gestellt oder aber für sonstige Signalübertragungen freigehalten werden kann. Der Organisationskanal OK ist also, wie die in Fig. 6 angegebenen Pfeile verdeutlichen, hinsichtlich seiner Zeit- schlitzzuweisung so gestaltet, daß bei der geografischen Numerierung der jeweils sieben Funkbereiche 1, 2,..7 der verschiedenen Funkbereichsgruppen eine Zeitschlitzrotation besteht, die im gesamten Funknetz FN nach Fig. 6 bzw. Fig. 1 synchron abläuft. Die zeitliche Überschneidungsfreiheit ist dabei durch die netzweite Synchronisation gewährleistet.

Um die Vorteile eines solchen Mehrfachzugriff-Organisationskanals voll auszuschöpfen, muß gefordert werden, daß die FUKO-Sendefrequenz dieses Organisationskanals auch in den Überschneidungszonen dd, cs, at, ch, fr, lu, be, nl und dk nach Fig. 1 erhalten bleibt. Dies ist durch eine geeignet gewählte FUKO-Sendefrequenz dieses Organisationskanals immer erreichbar. Für die FUKO-Empfangsfrequenz dieses Organisationskanals, auf der die mobilen Teilnehmer mit dem ihnen zugeordneten FUKO in Verbindung treten, gilt diese Forderung nicht. Um diese FUKO-Empfangsfrequenz im Bedarfsfall den in den Überschneidungszonen betriebenen Teilnehmerstationen vorschlagen zu können, ist es nötig, neben der durch die geraden und ungeraden Kanalzahlen in den Teilnehmerstationen erkennbaren unterschiedlichen Kanalraster eine zusätzliche Unterscheidung nach Ober- und Unterband vorzunehmen, die lediglich für den Organisationskanal durch eine spezielle neben der Kanalnummer übertragene Kennung erreicht wird.

5 Patentansprüche
7 Figuren

Patentansprüche

1. Mobiles Funksystem mit netzweiter Synchronisation, bestehend aus einer Anzahl Funkkonzentratoren in gegenseitiger räumlicher Anordnung nach Art eines Cellularsystems mit sich überlappenden Funkbereichen, bei dem jeweils eine fest vorgegebene Anzahl von einander unmittelbar benachbarten Funkbereichen eine Funkbereichsgruppe bilden, in denen sich die insgesamt zur Verfügung stehenden Frequenzkanäle, vorzugsweise Frequenzduplexkanäle, wiederholen, bei dem ferner der Frequenzverteilungsplan für die Funkkonzentratoren so festgelegt ist, daß Gleichkanalstörungen im jeweiligen Funkbereich einschließlich einer erweiterten Randzone weitgehend ausgeschlossen sind und bei dem wenigstens die Signalisierung in digitaler Form zwischen den ortsfesten Funkkonzentratoren und den beweglichen Teilnehmerstationen über Organisationskanäle, vorzugsweise Duplexorganisationskanäle vorgenommen ist, d a - d u r c h   g e k e n n z e i c h n e t , daß die den mobilen Teilnehmern (TLN) von den Funkkonzentratoren der Funkbereiche (1,2,..7) insgesamt zuweisbaren Frequenzkanäle wenigstens zwei Gruppen, nämlich eine erste Gruppe mit einem ersten Kanalraster (R10) und eine zweite Gruppe mit einem zweiten Kanalraster (R12,5) darstellen, daß ferner die Zuweisung von Frequenzkanälen der einen Gruppe Vorrang hat und die Zuweisung von Frequenzkanälen der anderen Gruppe nur im Grenzgebiet zu einem weiteren autonomen Funksystem hin dann erfolgt, wenn in der Überschneidungszone beider Funknetze ansonsten Kanalstörungen zu befürchten sind.

2. Mobiles Funksystem nach Anspruch 1, d a d u r c h   g e k e n n z e i c h n e t , daß die Frequenzkanäle in ihrer Gesamtheit fortlaufend numeriert sind und dabei die Frequenzkanäle der einen Gruppe, beispielsweise der ersten Gruppe, ungerade Kanalzahlen (Ki) und die Frequenzkanäle der anderen Gruppe, beispielsweise der zweiten Gruppe, gerade Kanalzahlen (Ki) haben und daß die Synthesizersteuerung der mobilen Teilnehmerstationen (TLN) in Abhängigkeit des Empfangs eines Kanalbefehls mit einer geraden oder ungeraden Kanalzahl den Synthesizer (Syn) auf das Kanalraster (R10, R12,5) der ersten oder zweiten Gruppe von Frequenzkanälen einstellt.

3. Mobiles Funksystem nach Anspruch 1 oder 2, d a d u r c h  g e k e n n z e i c h n e t , daß die Anzahl der Frequenzkanäle beider Gruppen bei Bedarf durch Anwendung eines Zwischenrasters um den Faktor zwei bei gleichzeitiger Halbierung der Kanalabstände erhöhbar ist.

4. Mobiles Funksystem nach einem der vorhergehenden Ansprüche, d a d u r c h  g e k e n n z e i c h n e t , daß die Kanalraster (R10, R12,5) beider Gruppen auf die Kanalmitte des fiktiven Kanals Null (K0) bezogen sind.

5. Mobiles Funksystem, bei dem den Funkkonzentratoren der Funkbereiche wenigstens ein Duplexorganisationskanal gemeinsam zugeordnet ist, der als Mehrfachzugriffkanal mit den Funkkonzentratoren zugeordneten Zeitschlitzen gestaltet ist, d a d u r c h  g e k e n n z e i c h n e t , daß bei vorgegebener der Gruppe mit Vorrang angehörenden FUKO-Sendefrequenz dieses Duplexorganisationskanals (OK) dessen FUKO-Empfangsfrequenz im Bedarfsfalle den mobilen Teilnehmern (TLN) aus der anderen Gruppe zuweisbar ist und daß hierzu unter Berücksichtigung der der Kanalpaarbildung dienenden Unterteilung jeder der beiden Gruppen von Frequenzkanälen in eine Ober- (OB) und Unterbandgruppe (UB) die Übertragung der Kanalnummern (Ki) der Frequenzkanäle im Organisationskanal für ihre teilnehmerseitige Zuweisung auch nach Ober- und Unterband unterscheidbar vorgenommen ist.

# FIG 1

DK

dk

nl

NL

dd

DD

FN

be

BE

lu

LU

6 1 FBR

5 7 2

CS

cs

4 3 6 1

fr

5 7 2

FR

4 3

at

ch

CH

AT

# FIG 2

| OB | | | | UB | | | |
|---|---|---|---|---|---|---|---|
| R12,5 | K 709 — — — — — K7K5K3K1K0 | | | R 12,5 | K709 — — — — — K7K5K3K1K0 | | |
| R10 | K884 — — — — K8K6K4K2K0 | | | R 10 | K 884 — — — — K8K6K4K2K0 | | |
| FR : | ⊢ — — — — — ⊢⎪⎪⎪⎢⊣ | | | FR : | ⊢ — — — · — ⊢⎪⎪⎪⎢⊣ | | |

461,30 MHz    465,74 MHz    465,75 MHz    451,30 MHz    455,74 MHz    455,75 MHz

## FIG 3

## FIG 6

## FIG 7

## FIG 4

## FIG 5